# EUROPEAN PATENT APPLICATION

(11) **EP 2 695 686 A1**
(43) Date of publication of application: **12.02.2014**
(21) Application number: 13176659.4
(22) Date of filing: 16.07.2013
(51) Int. Cl.: B21D 53/90, B60B 35/08, B60B 35/16, B21K 1/26

(54) **An axle housing and a method of manufacture**

(30) Priority: 08.08.2012 US 201213569230
(71) Applicant: ArvinMeritor Technology, LLC, Troy, MI 48084 (US)
(72) Inventor: Pinotti, Carlos, Troy, MI Michigan 48085 (US)
(74) Representative: Foot, Paul Matthew James

(57) **Abstract**

An axle housing and a method of manufacture. The axle housing may include first and second housings that have spindle portions that cooperate to define at least one spindle that may be configured to rotatably support a wheel assembly.

## Description

### TECHNICAL FIELD

This patent application relates to an axle housing and a method of manufacture.

### BACKGROUND

A method of fabricating an axle housing assembly is disclosed in U.S. Patent No. 7,461,454.

### SUMMARY

In at least one embodiment, a method of manufacturing an axle housing is provided. The method may include forming first and second housings and joining the first housing to the second housing. The first housing may have a first spindle portion. The second housing may have a second spindle portion. The first and second housings may be joined such that the first spindle portion is aligned with the second spindle portion to form a spindle that is configured to support a rotatable wheel assembly.

In at least one embodiment, a method of manufacturing an axle housing is provided. The method may include forming first and second housings having first and second spindle portions, respectively. The first housing may be joined to the second housing such that the first spindle portion is aligned with the second spindle portion to form a spindle that extends along an axis. At least a portion of the spindle may be hardened to form a first bearing surface. A bearing shoulder may be attached to the spindle adjacent to the first bearing surface. The bearing shoulder may be configured to inhibit axial movement of a wheel bearing.

In at least one embodiment, an axle housing is provided. The axle housing may have first and second housings. The first housing may include a first end that has a first spindle portion and a second end that has a second spindle portion. The second housing may engage the first housing and may have a first end that has a third spindle portion and second end that has a fourth spindle portion. The first and third spindle portions may cooperate to define a first spindle. The second and fourth spindle portions may cooperate to define a second spindle that is coaxially disposed with the first spindle. The first and second spindles may receive a wheel bearing that rotatably supports a wheel assembly.

### BRIEF DESCRIPTION OF THE DRAWINGS

Figure 1 is a perspective view of an exemplary axle assembly having an axle housing.

Figure 2 is a section view of a portion of an axle housing along section line 2-2.

Figure 3 is a perspective view of a blank that may be formed into a portion of the axle housing.

Figure 4 is a perspective view of the blank after forming.

Figure 5 is a perspective view of the axle housing.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

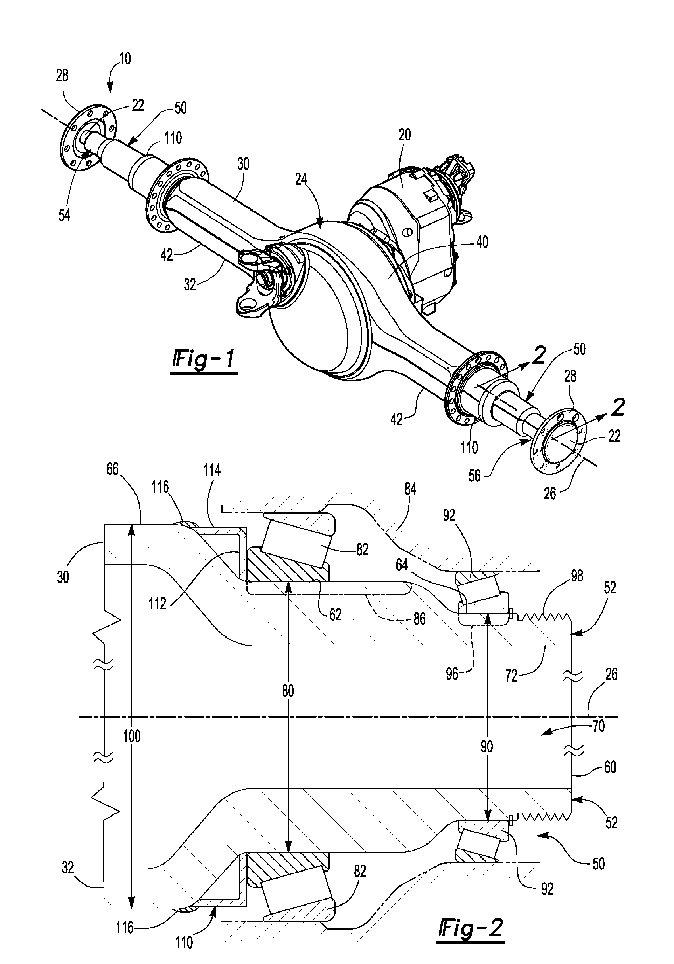

Referring to Figure 1, an exemplary axle assembly 10 is shown. The axle assembly 10 may be provided with a motor vehicle like a truck, bus, farm equipment, military transport or weaponry vehicle, cargo loading equipment for land, air, or marine vessels, or trailer.

One or more axle assemblies 10 may be provided with the vehicle. The axle assembly 10 may or may not be part of a vehicle drivetrain that may provide torque to propel the vehicle. An axle assembly 10 that is not part of a vehicle drivetrain may rotatably support a wheel assembly, which may include a wheel hub and/or a tire mounted on a wheel, but may not receive torque from a drivetrain component, such as a transmission, and transmit torque to the wheel assembly. An example of such an axle assembly 10 is one that may be provided with a trailer. An axle assembly 10 that is part of a vehicle drivetrain may receive torque from a drivetrain component and provide torque to one or more traction wheel assemblies. Such an axle assembly 10 may be referred to as a drive axle assembly. In the embodiment shown in Figure 1, the axle assembly 10 is configured as a drive axle assembly and may include a differential 20, one or more axles 22, and an axle housing 24.

The differential 20 may be configured to transmit torque to one or more wheel assemblies and permit wheel assemblies to rotate at different velocities. The differential 20 may be at least partially disposed in the axle housing 24.

One or more axles 22 may transmit torque from the differential 20 to a wheel assembly. In the embodiment shown in Figure 1, two axles 22 are provided that extend along and rotate about an axis 26. Each axle 22 may have a first end and a second end. The first end may be coupled to the differential 20. The second end may be disposed opposite the first end and may be located outside of the axle housing 24. An axle flange 28 may be disposed at the second end and may facilitate mounting of a wheel assembly.

The axle housing 24 may receive various components of the axle assembly 10. In addition, the axle housing 24 may facilitate mounting of the axle assembly 10 to the vehicle. In at least one embodiment, the axle housing 24 may include a first housing 30 and a second housing 32.

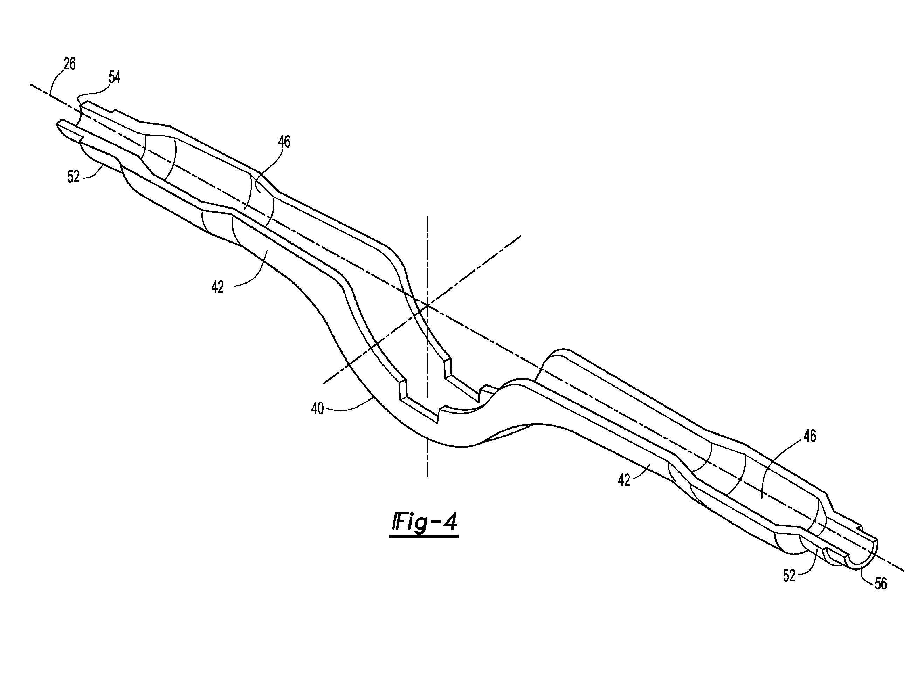

The first and second housings 30, 32 may cooperate to at least partially define the axle housing 24 when assembled together. An exemplary housing 30, 32 is shown in Figure 4. The first and second housings 30, 32 may be disposed on opposite sides of a plane that extends through the axis 26. As such, the first and second housings 30, 32 may generally form opposing halves of the axle housing 24. In addition, the first housing 30 may be disposed above the second housing 32 in one or more embodiments. In at least one embodiment, the first and second housings 30, 32 may generally be configured as mirror images of each other. Alternatively, it is contemplated that the first and second housings 30, 32 may not have identical configurations in one or more embodiments.

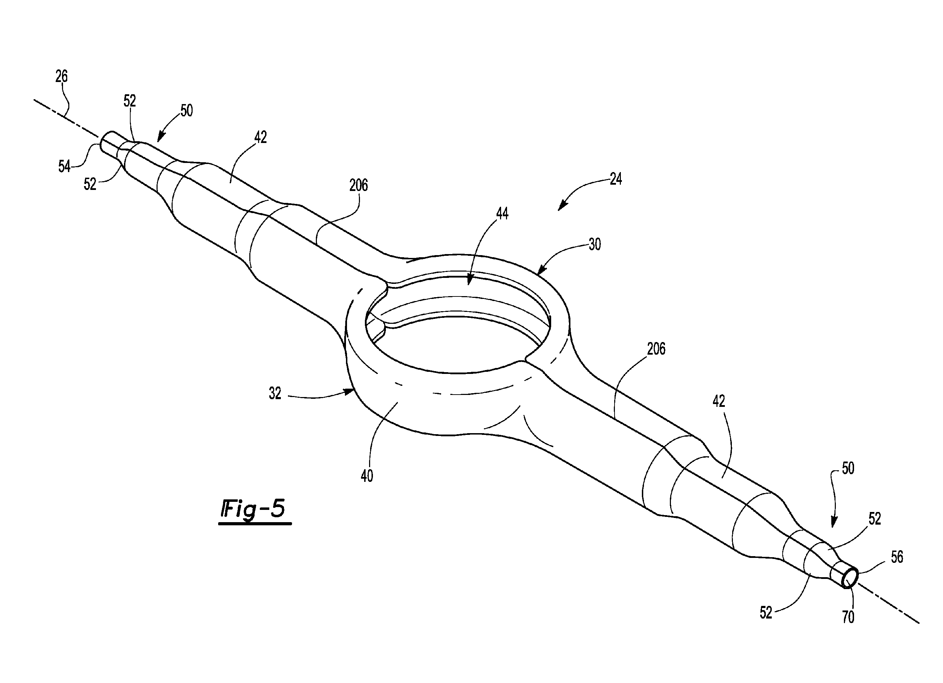

Referring to Figures 1 and 5, the first and second housings 30, 32, when assembled, may cooperate to at least partially define a center portion 40 and at least one arm portion 42 of the axle housing 24.

The center portion 40 may be disposed proximate the center of the axle housing 24. The center portion 40 may define a cavity 44 that may receive at least a portion of the differential 20. The region of the cavity 44 located below the differential 20 may at least partially define a sump portion that may contain a lubricant, such as oil, that may lubricate components of the axle assembly 10.

One or more arm portions 42 may extend from the center portion 40. In the embodiment shown in Figure 1, two arm portions 42 are provided that extend in opposite directions from the center portion 40 and away from the differential 20. Each arm portion 42 may be integrally formed with the center portion 40. In addition, each arm portion 42 may define an arm cavity 46 that may receive an axle 22. The arm portion 42 and arm cavity 46 may be disposed above the sump portion in one or more embodiments.

A spindle 50 may be disposed at the end of each arm portion 42. The spindle 50 may be configured to support a rotatable wheel assembly as will be discussed in more detail below. The spindle 50 may be integrally formed with the arm portion 42 such that the spindle 50 is not a separate component that is attached to the axle housing 24. More specifically, the spindle 50 may be formed by corresponding spindle portions 52 that may be provided with the first and second housings 30, 32. For example, a spindle portion 52 may be provided at a first end 54 and a second end 56 of the first and second housings 30, 32. The spindle portion 52 located at the first end 54 of the first housing 30 may be aligned and joined to the spindle portion 52 located at the first end 54 of the second housing 32 to form a spindle 50. Similarly, the spindle portion 52 located at the second end 56 of the first housing 30 may be aligned and joined to the spindle portion 52 located at the second end 56 of the second housing 32 to form a second spindle. As such, the spindle portions 52 on the first and second housings 30, 32 may cooperate to form at least one spindle 50.

Referring to Figure 2, an exemplary spindle 50 is shown in more detail. In Figure 2, the axle 22 is not shown for clarity. The spindle 50 may have a plurality of surfaces. For example, the spindle 50 may have an end surface 60, a first bearing surface 62, a second bearing surface 64, and an exterior surface 66.

The end surface 60 may be disposed at an end of the spindle 50. The end surface 60 may be spaced apart from the axis 26 and may extend radially with respect to the axis 26 in one or more embodiments. The end surface 60 may at least partially define an axle hole 70 through which the axle 22 may extend. The axle hole 70 may be at least partially defined by an interior surface 72. The interior surface 72 may be radially disposed about the axis 26 near the first and second bearing surfaces 62, 64 and may be located further away from the axis 26 proximate the exterior surface 66.

The first bearing surface 62 may be spaced apart from the end surface 60 and disposed between the second bearing surface 64 and the exterior surface 66. In addition, the first bearing surface 62 may be radially disposed about the axis 26 and may have a first diameter 80. As such, the first bearing surface 62 may be a circumferential surface that extends around the axis 26. The first bearing surface 62 may be configured to support and engage a first bearing 82 that may rotatably support a wheel assembly 84. In addition, at least a portion of the first bearing surface 62 may be hardened. An example of a hardened region 86 is represented by dashed lines in Figure 2.

The second bearing surface 64 may be disposed between the end surface 60 and the first bearing surface 62. The second bearing surface 64 may be radially disposed about the axis 26 and may have a second diameter 90. As such, the second bearing surface 64 may be a circumferential surface that extends around the axis 26. The second diameter 90 may be less than the first diameter 80. The second bearing surface 64 may be configured to support and engage a second bearing 92 that may also rotatably support the wheel assembly 84. In addition, at least a portion of the second bearing surface 64 may be hardened. An example of a hardened region 96 is represented by dashed lines in Figure 2. A threaded region 98 may be also be provided with or may be disposed adjacent to the second bearing surface 64. The threaded region 98 may receive a fastener, such as a nut, that may help inhibit axial movement of the second bearing 92.

The exterior surface 66 may be disposed between the first bearing surface 62 and the center portion 40. The exterior surface 66 or a portion thereof may be radially disposed about the axis 26 and may have a third diameter 100. The third diameter 100 may be greater than the first diameter 80.

The spindle 50 may have a non-uniform cross-sectional thickness to help withstand associated load forces. For instance, the cross-sectional thickness at the first bearing surface 62 may be greater than the cross-sectional thickness at the second bearing surface 64. In an exemplary embodiment, the thickness at the first bearing surface 62 may be around 16 mm while the thickness at the second bearing surface 64 may be around 9 mm. Similarly, the cross sectional thickness the first bearing surface 62 may be greater than the cross-sectional thickness at the exterior surface 66. The cross sectional thickness may be measured from the interior surface 72. For instance, the cross sectional thickness of the first bearing surface 62 may be measured from the first bearing surface 62 to the interior surface 72. Similarly the cross sectional thickness of the second bearing surface 64 may be measured from the second bearing surface 64 to the interior surface 72. The cross-sectional thickness may be adjusted prior to forming the first and second housings 30, 32 as will be discussed below in more detail.

The bearing shoulder 110 may be disposed on the spindle 50. The bearing shoulder 110 may be disposed adjacent to the first bearing surface 62 and may be configured to inhibit axial movement of the first bearing 82. In at least one embodiment, the bearing shoulder 110 may be disposed between the first bearing surface 62 and the exterior surface 66. The bearing shoulder 110 may have a ring-like configuration and may have a first wall 112 and a second wall 114. The first wall 112 may be disposed adjacent to the first bearing surface 62 and may extend radially with respect to the axis 26. The second wall 114 may extend from an end of the first wall 112 toward the exterior surface 66. The bearing shoulder 110 may be attached to the axle housing 24 in any suitable manner. For example, the bearing shoulder 110 may be welded to the spindle 50 or provided with a weld seam 116 proximate the exterior surface 66.

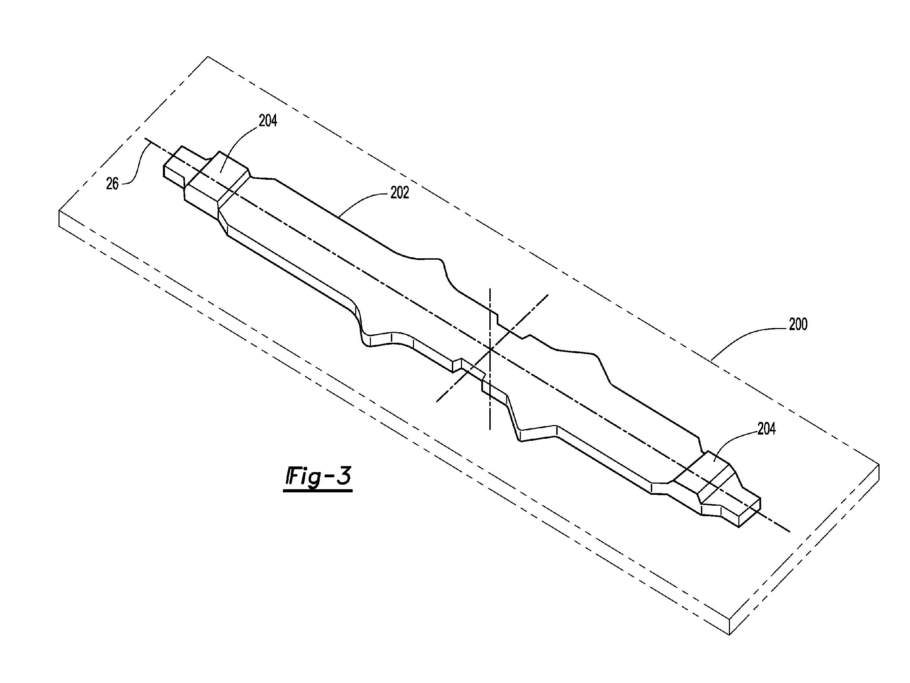

Methodologies of manufacturing an axle housing 24 will now be discussed in more detail. Method steps will be discussed primarily with reference to Figures 3-5. In addition, some method steps may be omitted or performed in a different sequence than may be described below.

Referring to Figure 3, a sheet of material 200 may be provided to form the first and second housings 30, 32. The sheet of material 200 may be made of a metal or metal alloy in one or more embodiments. In addition, the sheet of material 200 may initially be provided with a substantially uniform thickness.

The sheet of material 200 may be shaped into at least one blank 202. The blank 202 may be made by stamping or cutting the sheet of material 200. One blank 202 may be provided to make the first housing 30 and another blank may be provided to make the second housing 32.

The thickness of the sheet of material 200 or blank 202 may be adjusted in localized regions before the blank 202 is formed into a housing 30, 32. The thickness may be adjusted by roll forming the sheet of material or blank 202 to increase the relative thickness of at least part of the spindle portion 52. For example, a thickened region 204 may be provided in a region that will become or be disposed proximate the first bearing surface 62. The thickened region 204 may be provided by decreasing the thickness of the sheet of material 200 or blank 202 adjacent to the thickened region 204 (e.g., reducing the thickness of a thick blank) or by increasing the thickness at the thickened region as compared to adjacent areas of the sheet or blank 202 (e.g., by increasing the thickness of a thin blank). In either case, the thickened region 204 may have a greater thickness than an adjacent portion of the housing 30, 32. The thickened region 204 may extend across the entire width of the sheet of material 200 or blank 202, or in a direction that is perpendicular to the axis 26. Moreover, the thickened regions 204 may be provided on or extend from a common side of the sheet of material 200 or blank 202.

Referring to Figure 4, each blank 202 may be formed into an axle housing, such as a first housing 30 or a second housing 32. Forming of the blank may include bending the blank 202 such that the blank 202 extends at least partially around the axis 26. As such, portions of the center portion 40, arm portion 42, and spindle portion 52 may be provided with each housing 30, 32. The blank 202 may be formed in a press in a manner known by those in the art.

Referring to Figure 5, the first housing 30 may be positioned with respect to the second housing 32. The first and second housings 30, 32 may be positioned into engagement with each other such that the spindle portions 52 on the first housing 30 are aligned with corresponding spindle portions 52 on the second housing 32 as previously discussed.

Next, the first and second housings 30, 32 may be joined together to form the axle housing 24. In at least one embodiment, the first and second housings 30, 32 may be joined together by welding. As such, a plurality of weld seams 206 may be provided that may extend from the center portion 40 to the first and second ends 54, 56.

A portion of the axle housing 24 may be hardened. For example, at least a portion of each spindle 50 may be hardened, such as by providing hardened regions 86, 96 proximate the first and second bearing surfaces 62, 64 as previously described. The hardened regions 86, 96 may extend around the circumference of the spindle 50. The axle housing 24 may be hardened using any suitable technique, such as induction hardening. This step may be performed after forming each blank 202 into an axle housing 24 and either before or after the first and second housings 30, 32 are joined together in one or more embodiments.

One or more machining or finishing operations may be performed on the axle housing 24 after joining the first housing 30 to the second housing 32 and/or hardening a portion of the axle housing 24. For example, one or more surfaces of the spindle 50, such as the first and second bearing surfaces 62, 64 may be machined or turned to provide a desired geometry. In addition, the threaded region 98 may be provided proximate each end of the spindle 50.

The bearing shoulder 110 may be attached to the axle housing 24. The bearing shoulder 110 may be attached any suitable manner, such as by providing a weld seam 116, which is best shown in Figure 2. Attachment of the bearing shoulder 110 may occur either before or after machining operations are performed in one or more embodiments.

The axle housing and methods of manufacture described above allow an axle housing to be manufactured with an integral spindle. As such, separate spindles do not need to be forged, machined, and friction welded to an axle housing, thereby reducing manufacturing costs, assembly steps, and associated labor and material handling. In addition, preparatory manufacturing steps for friction welding, such as milling the ends of the axle housing and swaging and grotness operations may be eliminated. In addition, an integral spindle may allow the overall weight of the axle housing to be reduced in one or more embodiments.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A method of manufacturing an axle housing comprising:
forming a first housing that has a first spindle portion disposed at a first end of the first housing;
forming a second housing that has a second spindle portion disposed at a first end of the second housing; and
joining the first housing to the second housing such that the first spindle portion is aligned with the second spindle portion to form a spindle that is configured to support a rotatable wheel assembly.

2. The method of claim 1 wherein the step of forming the first housing includes providing a first sheet of material, stamping a first blank from the first sheet of material, and forming the first blank into the first housing, and
preferably wherein the step of forming the second housing includes providing a second sheet of material, stamping a second blank from the second sheet of material, and forming the second blank into the second housing.

3. The method of claim 2 wherein the step of forming the first housing includes adjusting a thickness of the first blank before forming the first blank into the first housing such that at least part of the first spindle portion has a greater thickness than an adjacent portion of the first housing, and
preferably wherein the step of forming the second housing includes adjusting a thickness of the second blank before forming the second blank into the second housing such that at least part of the second spindle portion has a greater thickness than an adjacent portion of the second housing.

4. The method of any one of the previous claims wherein the step of joining the first housing to the second housing includes welding the first housing to the second housing.

5. The method of any one of the previous claims further comprising machining at least one bearing surface on the spindle after joining the first housing to the second housing.

6. The method of any one of the previous claims further comprising induction hardening the first and second spindle portions after forming the first and second housings.

7. The method of any one of claims 1 to 5 further comprising hardening at least a portion of the spindle to form a first bearing surface; and
attaching a bearing shoulder to the spindle adjacent to the first bearing surface, wherein the bearing shoulder is configured to inhibit axial movement of a wheel bearing.

8. The method of claim 7 wherein the spindle further comprises a second bearing surface that is spaced apart from the first bearing surface, wherein the step of hardening at least a portion of the spindle includes induction hardening the spindle to form first and second bearing surfaces.

9. The method of claim 8 wherein the first bearing surface has a first diameter and the second bearing surface has a second diameter that is less than the first diameter.

10. The method of claim 9 wherein the spindle has an exterior surface having a third diameter that is greater than the first diameter, wherein the first bearing surface is disposed between the second bearing surface and the exterior surface.

11. The method of claim 10 wherein the bearing shoulder is disposed between the exterior surface and the first bearing surface.

12. The method of claim 11 wherein the spindle extends along an axis and the bearing shoulder includes a first wall disposed adjacent to the first bearing surface and a second wall that extends from an end of the first wall toward the exterior surface, wherein the first wall extends radially with respect to the axis, and
preferably wherein attaching the bearing shoulder further comprises welding the bearing shoulder to the spindle proximate the exterior surface.

13. The method of claim 10 wherein the spindle has a greater cross sectional thickness at the first bearing surface than at the second bearing surface, and
preferably wherein the spindle has a greater cross sectional thickness at the first bearing surface than at the exterior surface.

14. An axle housing comprising:
a first housing that includes:
a first end having a first spindle portion, and
a second end disposed opposite the first end that has a second spindle portion; and
a second housing that engages the first housing, the second housing including:
a first end having a third spindle portion, and
a second end disposed opposite the first end that has a fourth spindle portion;
wherein the first and third spindle portions cooperate to define a first spindle and the second and fourth spindle portions cooperate to define a second spindle that is coaxially disposed with the first spindle; wherein the first and second spindles each receive a wheel bearing that rotatably supports a wheel assembly.

15. The axle housing of claim 14 further comprising a bearing shoulder that engages the first spindle, wherein the bearing shoulder is disposed adjacent to a first bearing surface that engages the wheel bearing, and
preferably wherein the bearing shoulder includes a first wall disposed adjacent to the first bearing surface and a second surface that extends from an end of the first wall toward an exterior surface of the first spindle, wherein the first wall extends radially with respect to the axis.
